# EUROPÄISCHE PATENTSCHRIFT

(11) **EP 1 260 396 B1**
(45) Veröffentlichungstag und Bekanntmachung des Hinweises auf die Patenterteilung: **01.10.2003**
(21) Anmeldenummer: 02008423.2
(22) Anmeldetag: 12.04.2002
(51) Int. Cl.: B60J 10/10

(54) **Dichtungselement für ein bewegliches Dachteil in einem Fahrzeug**
Sealing system for a moveable roof panel in a vehicle
Joint d' étanchéité pour un élément de toit ouvrant de véhicule

(30) Priorität: 15.05.2001 DE 10123702
(43) Veröffentlichungstag der Anmeldung: 27.11.2002
(73) Patentinhaber: CTS Fahrzeug-Dachsysteme GmbH, 21079 Hamburg (DE)
(72) Erfinder: Raisch, Dieter, 71277 Rutesheim (DE); Hess, Reiner, 72336 Balingen-Ostdorf (DE)
(74) Vertreter: Müller, Gottfried

(56) Entgegenhaltungen:
- EP-A- 0 654 372
- WO-A-97/17221
- WO-A-98/26949
- DE-A- 3 500 436
- FR-A- 2 747 172

## Beschreibung

Die Erfindung bezieht sich auf ein Dichtungselement, insbesondere für ein bewegliches Dachteil in einem Fahrzeug, nach dem Oberbegriff des Anspruches 1.

Die gattungsgemäße Druckschrift DE 35 00 436 A1 offenbart ein Dichtungselement, welches im Randbereich von Glasklappdächern von Fahrzeugen eingesetzt wird. Das Dichtungselement umfasst einen von Dichtmaterial umschlossenen Hohlraum sowie eine am Dichtkörper anliegende Dichtwand, deren eine Stirnseite mit dem Dichtkörper verbunden und deren gegenüberliegende Stirnseite frei beweglich ist. Zwischen Dichtkörper und Dichtwand ist eine Aufnahmetasche gebildet, in die Kabelführungskanäle zur Aufnahme von Heizleitungen eingebracht sind. In Dichtstellung liegt das Glasklappdach auf der Außenseite der beweglichen Dichtwand auf, die hierdurch gegen die Aufnahmetasche gedrückt wird, so dass die offene Seite der Aufnahmetasche verschlossen wird und die Heizleitungen innerhalb der Aufnahmetasche sicher eingeschlossen sind.

Voraussetzung für ein sicheres Verwahren der Heizleitungen in der Aufnahmetasche ist jedoch, dass das Glasklappdach sich in Schließposition befindet, in welcher das Dichtungselement seine Dichtstellung einnimmt. Bei geöffnetem Glasklappdach fehlt dagegen der von dem Dachteil auf die Dichtwand ausgeübte Druck, so dass die Aufnahmetasche aufklappen kann und die Heizleitungen innerhalb der Aufnahmetasche nicht mehr sicher eingeschlossen sind.

Aus der Druckschrift DE 44 41 667 C1 ist ein Dichtungselement bekannt, welches in einem Klapp- bzw. Faltverdeck, das zwischen einer den Fahrgastinnenraum freigebenden Öffnungsstellung und einer Schließstellung zu verstellen ist, im Dichtspalt zwischen Verdeck und Fahrzeugkarosserie angeordnet ist, um in Schließposition des Verdecks einen wind-, druck- und insbesondere wasserdichten Abschluss zu schaffen. Zur Befestigung an einer karosserieseitigen Leiste weist das Dichtungselement einen Klemmabschnitt auf, der als U-förmiger Aufnahmeraum ausgebildet ist, in den einteilig mit einer Dichtwand ausgebildete Gummilippen einragen, welche die in den Aufnahmeraum einzusteckende Leiste mit einer Klemmkraft beaufschlagen, die einem versehentlichen Lösen des Dichtungselementes von der Leiste entgegenwirkt.

Da insbesondere im Bereich des Dichtspaltes üblicherweise Kabel geführt sind, beispielsweise zur Stromversorgung eines Elektromotors, zur Hydraulikölversorgung eines hydraulischen Stellgliedes oder als Antrieb für ein in der Dachöffnung verschiebliches Dachelement, muss darauf geachtet werden, dass in Schließstellung des Fahrzeugdaches die Kabel im Dichtspalt kein Hindernis bilden, welches die Dichtigkeit beeinträchtigen könnte. Die Kabel müssen daher mit Abstand zum Dichtspalt verlaufen und über geeignete Befestigungselement fixiert sein. Andernfalls können zwischen der Dichtfläche des Dichtungselements und den Kabeln Spalte entstehen, durch die Wasser in den Fahrgastinnenraum eindringen kann.

Die Druckschrift DE 691 11 020 T2 offenbart eine Fahrzeug-Motorraumdichtung, welche an einem-Dichtkörper eine Aufnahmetasche zur Aufnahme von Kabeln besitzt, wobei die Aufnahmetasche entweder auf der Innenseite oder auf der Außenseite des Dichtkörpers angeordnet sein kann. Die Aufnahmetasche ist in einer ersten Ausführungsform kreisrund als geschlossener Kanal ausgeführt, in einer zweiten Ausführungsform teilkreisförmig mit einer radialen Einführöffnung zum Einführen der Kabel. In beiden Varianten bildet die Aufnahmetasche zugleich einen Kabelführungskanal, was jedoch den Nachteil hat, dass keine zusätzliche Sicherheit gegen ein unbeabsichtigtes Lösen des Kabels in der Aufnahmetasche gegeben ist. Insbesondere bei der teilweise offenen Aufnahmetasche besteht die Gefahr, dass auf Grund von Erschütterungen das Kabel sich aus seiner Aufnahme in der Aufnahmetasche löst und sich völlig unkontrolliert bewegen kann.

Gemäß einem weiteren in der DE 691 11 020 T2 beschriebenen Ausführungsbeispiel ist die Aufnahmetasche auf der Innenseite innerhalb eines Hohlraumes des Dichtkörpers angeordnet. Das Kabel kann nur über die axialen Stirnseiten in den Kabelführungskanal in der Aufnahmetasche eingeschoben werden, nicht jedoch seitlich eingeschoben bzw. eingeknöpft werden. Dadurch gestaltet sich die Montage des Kabels enorm schwierig.

Der Erfindung liegt das Problem zugrunde, ein gattungsgemäßes Dichtungselement zu schaffen, in das in einfacher Weise Strom-, Versorgungs- oder Antriebskabel für das bewegliche Dachteil ohne Beeinträchtigung der Dichtfunktion integriert werden können.

Dieses Problem wird erfindungsgemäß mit den kennzeichnenden Merkmalen des Anspruches 1 gelöst. Die Unteransprüche geben zweckmäßige Weiterbildungen an.

Das Dichtungselement weist eine zu einer Seite hin offene Aufnahmetasche auf, die üblicherweise näherungsweise U-förmig ausgebildet ist und von einer Dichtwand des Dichtungselementes begrenzt wird, wobei in der Aufnahmetasche ein Kabelführungskanal ausgebildet ist, in den ein Kabel des Dachteiles über die offene Seite der Aufnahmetasche einführbar ist. Diese Ausführung erlaubt es, ein Kabel sicher in das Dichtungselement zu integrieren, so dass das Dichtungselement zusätzlich zu seiner Dichtfunktion auch eine Befestigungsfunktion für das Kabel übernimmt und separat ausgebildete Befestigungselemente zur Fixierung des Kabels am Dachteil oder an der Fahrzeugkarosserie entfallen können. Das Kabel wird hierbei mit hoher Sicherheit im Dichtungselement gehalten, da der Kabelführungskanal sich innerhalb der Aufnahmetasche im Dichtungselement befindet, so dass selbst im Falle eines versehentlichen Lösens des Kabels aus dem Kabelführungskanal das Kabel sich in der Aufnahmetasche innerhalb des Dichtungselementes befindet, wodurch eine ausreichende Sicherung des Kabel sichergestellt ist und vermieden wird, dass das Kabel ohne Führung im Bereich der Dachöffnung durchhängt.

Das Kabel kann in zweckmäßiger Weiterbildung formschlüssig in den Kabelführungskanal eingeknöpft werden, der beispielsweise als Kanal mit einem an den Kabelquerschnitt angepassten Kanalquerschnitt ausgeführt ist, welcher insbesondere lediglich an einer Längsseite teilweise geöffnet ist, um das Kabel in den Kabelführungskanal einführen zu können. Der Formschluss kann aber auch über eine Gummilippe erreicht werden, welche insbesondere einteilig mit dem Dichtungselement ausgebildet ist und den Kabelführungskanal an einer Seite begrenzt. Zur Verbesserung der Klemmwirkung kann die Gummilippe in Richtung des Bodens der Aufnahmetasche hin geneigt sein, wodurch eine ausgeprägtere Hinterschneidung des Kabels im Kabelführungskanal mit erhöhter Klemmkraft gegeben ist. Der Kabelführungskanal kann auch an zwei Seiten von jeweils einer Gummilippe begrenzt sein.

Der Aufnahmetasche ist von einer Dichtwand begrenzt, an der auch der Kabelführungskanal innerhalb der Aufnahmetasche ausgebildet ist, wobei die der Aufnahmetasche abgewandte Außenseite der Dichtwand zugleich eine Dichtfläche bilden kann, an der in Dichtstellung ein abzudichtendes Bauteil anliegt.

Vorteilhaft sind zumindest zwei Kabelführungskanäle im Aufnahmetasche vorgesehen, welche beispielsweise von einer gemeinsamen Gummilippe separiert sind. Die beiden Kabelführungskanäle können hintereinander liegend zwischen dem Boden der Aufnahmetasche und der dem Boden gegenüberliegenden Einführseite der Aufnahmetasche angeordnet sein. Die die Kabelführungskanäle trennenden Wandabschnitte bilden ein Hindernis für eingesetzte Kabel und verhindern, dass die Kabel versehentlich gelöst werden und aus der Aufnahmetasche herausgehoben werden.

Zur Erhöhung der Stabilität kann in die Dichtwand, welche die Aufnahmetasche begrenzt, ein Versteifungsblech eingebracht sein.

Weitere Vorteile und zweckmäßige Ausführungen sind den weiteren Ansprüchen, der Figurenbeschreibung und den Zeichnungen zu entnehmen. Es zeigen:
- Fig. 1: eine perspektivische Ansicht auf ein verstellbares Fahrzeugverdeck, wobei zur Abdichtung des Dichtspaltes zwischen beweglichen Dachteilen und karosserieseitigen Fahrzeugteilen Dichtungselemente vorgesehen sind,
- Fig. 2: einen Schnitt gemäß Schnittlinie II - II aus Fig. 1 mit der Darstellung eines Dichtungselementes.

In den folgenden Figuren sind gleiche Bauteile mit gleichen Bezugszeichen versehen.

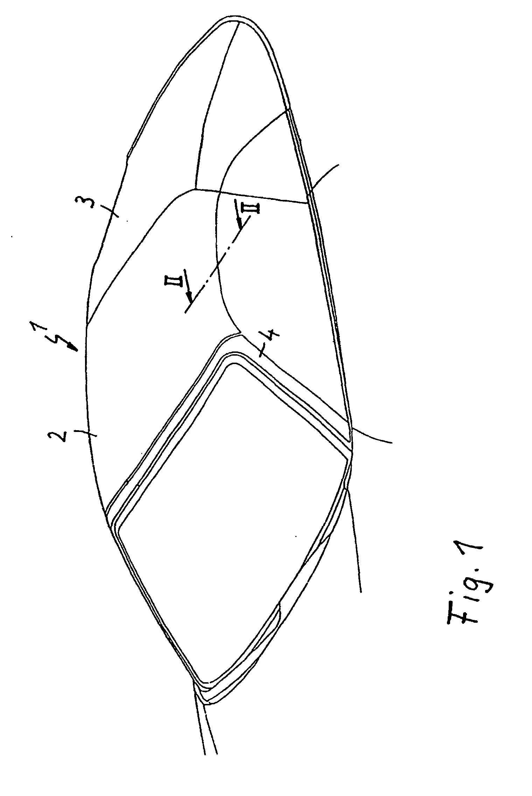

Das in Fig. 1 dargestellte Cabriolet-Fahrzeug weist ein Fahrzeugverdeck 1 auf, das zwischen der gezeigten, den Fahrzeuginnenraum überdeckenden Schließposition und einer Ablageposition, in der der Fahrzeuginnenraum freigelegt ist, zu verstellen ist. Das Fahrzeugverdeck ist im Ausführungsbeispiel als Hardtop-Verdeck mit einem vorderen und einem hinteren Dachteil 2 bzw. 3 ausgeführt, die jeweils in sich starr ausgebildet sind und über eine Verstellkinematik zwischen Schließ- und Ablageposition zu verstellen sind.

Zur Abdichtung des Dichtspaltes zwischen beweglichen Dachteilen des Fahrzeugverdeckes l und karosseriefesten Fahrzeugteilen, beispielsweise dem Windschutzscheibenrahmen 4, sind Dichtungselemente vorgesehen, über die ein wind-, wasser- und gegebenenfalls auch druckdichter Abschluss geschaffen werden kann.

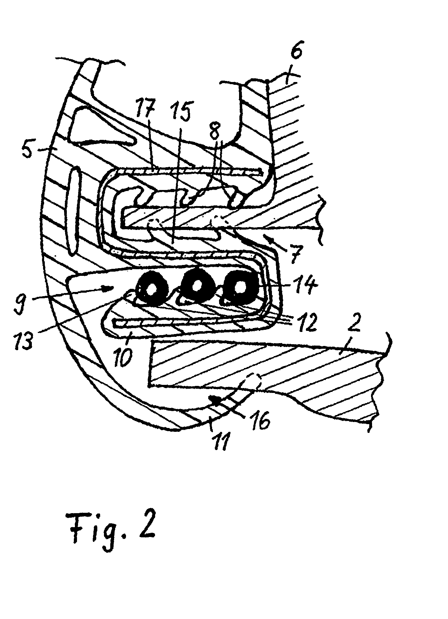

Das in Fig. 2 dargestellte Dichtungselement 5 im Dichtspalt zwischen verstellbarem Fahrzeugverdeck und karosseriefestem Fahrzeugteil ist karosserieseitig an einer Leiste 6 gehalten, die am Windschutzscheibenrahmen gehalten ist. Die Leiste 6 ragt in einen Klemmabschnitt 7 des Dichtungselementes 5 ein, der als Klemmraum mit an den begrenzenden Seitenwänden ausgebildeten, zum Boden des Klemmraumes hin gerichteten Klemmhaken 8, welche Teil-der Klemmraumwandung bzw. des Dichtkörpers des Dichtelements sind, ausgebildet ist. Die Klemmhaken 8 beaufschlagen die in den Klemmabschnitt 7 einragende, karosseriefeste Leiste 6 mit einer ausreichend hohen Klemmkraft, wodurch das Dichtungselement 5 sicher an der Leiste 6 gehalten ist.

Das Dichtungselement 5 weist weiterhin eine Aufnahmetasche 9 zur Aufnahme von Kabeln 14 auf, bei denen es sich beispielsweise um Stromkabel oder Versorgungskabel für Hydrauliköl oder dergleichen handelt. Die Kabel 14 werden über das Dichtungselement 5 karosseriefest in Position gehalten. Das Dichtungselement 5 übernimmt zusätzlich zu seiner Dichtfunktion auch die Aufgabe, die Kabel 14 sicher zu halten, so dass das Dichtungselement Befestigungsglieder zur Befestigung der Kabel am karosserieseitigen Fahrzeugteil ersetzt oder zumindest ergänzt.

Die Aufnahmetasche 9 weist einen etwa U-förmigen Querschnitt auf und teilt mit dem Klemmabschnitt 7 eine gemeinsame Dichtwand 15. Auf der dem Klemmabschnitt 7 abgewandten Seite wird die Aufnahmetasche 9 von einer weiteren Dichtwand 10 des Dichtungselementes 5 begrenzt, wobei die Kabelführungskanäle 12 auf der Innenseite dieser außen liegenden Dichtwand 10 angeordnet sind und jeweils von Gummilippen 13, welche einteilig mit der Dichtwand 10 ausgebildet sind, begrenzt sind. Die Gummilippen 13 sind zum Boden der Aufnahmetasche 9 hin gerichtet, wodurch der Widerstand gegen ein unbeabsichtigtes Lösen der Kabel 14 in den Kabelführungskanälen 12 erhöht wird. Im Ausführungsbeispiel sind insgesamt drei Kabelführungskanäle 12 angeordnet, welche in einer Reihe entlang der Dichtwand 10 liegen.

Weiterhin ist eine die Aufnahmetasche 9 einschließlich der äußeren Dichtwand 10 der Aufnahmetasche übergreifende Dichtlippe 11 vorgesehen, wobei dem Raum zwischen Dichtwand 10 und Dichtlippe 11 die Funktion einer Dichtaufnahme 16 zukommt, in die in Dichtstellung das bewegliche Dachteil 2 des Fahrzeugverdeckes einragt, an dem die freie Stirnseite der Dichtlippe 11 dichtend anliegt. Die Dichtlippe 11 übergreift die Öffnung der Aufnahmetasche 9 für die Kabel 14 und bildet dadurch eine weitere, die Aufnahmetasche 9 begrenzende Dichtwand. Dichtaufnahme 16, Aufnahmetasche 9 sowie Klemmabschnitt 7 liegen hintereinander in einer Reihe angeordnet im Dichtungselement 5, wobei die Einführöffnungen von Dichtaufnahme, Aufnahmetasche und Klemmabschnitt jeweils abwechselnd auf gegenüberliegenden Seiten angeordnet sind.

Zur Verbesserung der Steifigkeit und der Dichtungseigenschaften sowie zur Erhöhung der Klemmkraft ist ein Versteifungsblech 17 in den Dichtkörper des Dichtungselementes 5 eingebracht, welches etwa S-förmig ausgebildet ist und sowohl den U-förmigen Klemmabschnitt 7 als auch die U-förmige Aufnahmetasche 19 umgreift.

Die äußere Dichtwand 10 der Aufnahmetasche 9 bildet auf ihrer der Dichtaufnahme 16 zugewandten Außenseite eine Dichtfläche, an der in Dichtstellung das Dachteil 2 anliegt.

Das Dichtungselement kann in verschiedenartigen, zwischen einer Schließposition und einer Öffnungsposition verstellbaren Fahrzeugdächern eingesetzt werden. Neben der hier dargestellten Verwendung in Hardtop-Fahrzeugdächern kommt auch eine Verwendung in Faltverdecken, bei Lamellendächern und bei Schiebedächern in Frage.

## Patentansprüche

1. Dichtungselement für ein bewegliches Dachteil (2) in einem Fahrzeug, mit einer von einer Dichtwand (10) des Dichtungselements (5) begrenzten, nach einer Seite offenen Aufnahmetasche (9), wobei auf der der Aufnahmetasche (9) zugewandten Innenseite der Dichtwand (10) zumindest ein Kabelführungskanal (12) ausgebildet ist, der über die offene Seite der Aufnahmetasche (9) zugänglich ist,
**dadurch gekennzeichnet,**
**dass** die Dichtwand (10) zwischen der Aufnahmetasche (9) und einer Dichtaufnahme (16) liegt, in die in Dichtstellung das bewegliche Dachteil einragt, und **dass** die offene Seite der Aufnahmetasche (9) von einer Dichtlippe (11) übergriffen ist, wobei die Dichtaufnahme (16) zwischen der der Aufnahmetasche (9) abgewandten Außenseite der Dichtwand (10) und der Dichtlippe (11) gebildet ist.

2. Dichtungselement nach Anspruch 1,
**dadurch gekennzeichnet,**
**dass** der Kabelführungskanal (12) von einer Gummilippe (13) begrenzt ist.

3. Dichtungselement nach Anspruch 2,
**dadurch gekennzeichnet,**
**dass** die Gummilippe (13) einteilig mit der Dichtwand (10) ausgebildet ist.

4. Dichtungselement nach Anspruch 2 oder 3,
**dadurch gekennzeichnet,**
**dass** die Gummilippe (13) zum Boden der Aufnahmetasche (9) hin geneigt sind.

5. Dichtungselement nach einem der Ansprüche 1 bis 4,
**dadurch gekennzeichnet,**
**dass** zumindest zwei Kabelführungskanäle (12) in der Aufnahmetasche (9) vorgesehen sind.

6. Dichtungselement nach Anspruch 5,
**dadurch gekennzeichnet,**
**dass** zwei aneinander grenzende Kabelführungskanäle (12) von einer gemeinsamen Gummilippe (13) separiert sind.

7. Dichtungselement nach Anspruch 5 oder 6,
**dadurch gekennzeichnet,**
**dass** die Kabelführungskanäle (12) in Einführrichtung der Aufnahmetasche (9) gesehen hintereinander liegend angeordnet sind.

8. Dichtungselement nach einem der Ansprüche 1 bis 7,
**dadurch gekennzeichnet,**
**dass** in die Dichtwand (10) ein Versteifungsblech (17) eingebracht ist.

9. Dichtungselement nach einem der Ansprüche 1 bis 8,
**dadurch gekennzeichnet,**
**dass** die Außenseite der Dichtwand (10) eine Dichtfläche bildet.

## Claims

1. Sealing element for a movable roof part (2) in a vehicle, with a reception pocket (9) delimited by a sealing wall (10) of the sealing element (5) and open to one side, at least one cable guide duct (12), which is accessible via the open side of the reception pocket (9), being formed on the inside, facing the reception pocket (9), of the sealing wall (10) **characterized in that** the sealing wall (10) lies between the reception pocket (9) and a sealing receptacle (16), into which the movable roof part projects in the sealing position, and **in that** the open side of the reception pocket (9) is surrounded by a sealing lip (11), with the sealing receptacle (16) being formed between the outside, facing away from the reception pocket (9), of the sealing wall (10) and the sealing lip (11).

2. Sealing element according to Claim 1, **characterized in that** the cable guide duct (12) is delimited by a rubber lip (13).

3. sealing element according to Claim-2, **characterized in that** the rubber lip (13) is formed in one piece with the sealing wall (10).

4. Sealing element according to Claim 2 or 3, **characterized in that** the rubber lip (13) is inclined towards the bottom of the reception pocket (9).

5. Sealing element according to one of Claims 1 to 4, **characterized in that** at least two cable guide ducts (12) are provided in the reception pocket (9).

6. Sealing element according to Claim 5, **characterized in that** two cable guide ducts (12) adjacent to one another are separated by a common rubber lip (13).

7. Sealing element according to Claim 5 or 6, **characterized in that** the cable guide ducts (12) are arranged one behind the other, as seen in the direction of introduction of the reception pocket (9).

8. Sealing element according to one of Claims 1 to 7, **characterized in that** a stiffening plate (17) is inserted into the sealing wall (10).

9. Sealing element according to one of Claims 1 to 8, **characterized in that** the outside of the sealing wall (10) forms a sealing surface.

## Revendications

1. Elément d'étanchéité pour une partie de toit ouvrant (2) dans un véhicule, comprenant un compartiment de logement (9) ouvert vers un côté, limité par une paroi d'étanchéité (10) de l'élément d'étanchéité (5), au moins un conduit de passage de câbles (12) étant réalisé du côté intérieur de la paroi d'étanchéité (10) tourné vers le compartiment de logement (9) et étant accessible par le biais du côté ouvert du compartiment de logement (9),
**caractérisé en ce que**
la paroi d'étanchéité (10) se trouve entre le compartiment de logement (9) et un logement d'étanchéité (16), dans lequel pénètre la partie de toit mobile dans la position de fermeture . étanche, et **en ce que** le côté ouvert du compartiment de logement (9) est engagé par le dessus par une lèvre d'étanchéité (11), le logement d'étanchéité (16) étant formé entre le côté extérieur de la paroi d'étanchéité opposé au compartiment de logement (9) et la lèvre d'étanchéité (11).

2. Elément d'étanchéité selon la revendication 1,
**caractérisé en ce que** le conduit de passage de câbles (12) est limité par une lèvre en caoutchouc (13).

3. Elément d'étanchéité selon la revendication 2,
**caractérisé en ce que** la lèvre en caoutchouc (13) est réalisée d'une seule pièce avec la paroi d'étanchéité (10).

4. Elément d'étanchéité selon la revendication 2 ou 3, **caractérisé en ce que** les lèvres en caoutchouc (13) sont inclinées vers le fond du compartiment de logement (9).

5. Elément d'étanchéité selon l'une quelconque des revendications 1 à 4,
**caractérisé en ce qu'**au moins deux conduits de passage de câbles (12) sont prévus dans le compartiment de logement (9).

6. Elément d'étanchéité selon la revendication 5,
**caractérisé en ce que** deux conduits de passage de câbles (12) adjacents sont séparés par une lèvre en caoutchouc commune (13).

7. Elément d'étanchéité selon la revendication 5 ou 6, **caractérisé en ce que** les conduits de passage de câbles (12) sont disposés les uns derrière les autres vu dans le sens d'insertion du compartiment de logement (9).

8. Elément d'étanchéité selon l'une quelconque des revendications 1 à 7,
**caractérisé en ce qu'**une tôle de renforcement (17) est montée dans la paroi d'étanchéité (10).

9. Elément d'étanchéité selon l'une quelconque des revendications 1 à 8, **caractérisé en ce que** le côté extérieur de la paroi d'étanchéité (10) forme une face d'étanchéité.
